# FASCICULE DE BREVET EUROPEEN

(11) **EP 2 522 956 B1**
(45) Date de publication et mention de la délivrance du brevet: **20.11.2019**
(21) Numéro de dépôt: 12290158.0
(22) Date de dépôt: 09.05.2012
(51) Int. Cl.: G01C 21/16, G01C 25/00

(54) **Procédé de gestion automatique d'un gyromètre longitudinal monté sur un engin volant**
Automatisches Steuerungsverfahren eines länglichen Drehzahlmessers, der auf einem Fluggerät montiert ist
Method for automatically managing a pitch rate gyro mounted on a aircraft

(30) Priorité: 13.05.2011 FR 1101455
(43) Date de publication de la demande: 14.11.2012
(73) Titulaire: MBDA France, 92350 Le Plessis-Robinson (FR)
(72) Inventeur: De Picciotto, François, 75015 Paris (FR)
(74) Mandataire: Gevers & Orès

(56) Documents cités:
- EP-A1- 0 392 104
- FR-A1- 2 826 447
- US-A- 4 017 187
- US-A1- 2010 133 374

## Description

La présente invention concerne un procédé de gestion automatique d'un gyromètre longitudinal qui est monté sur un engin volant à navigation inertielle, susceptible d'être mis en rotation, ainsi qu'un engin volant, en particulier un missile aérien, qui est pourvu d'un tel gyromètre longitudinal.

On sait que la dérive de navigation inertielle limite la portée d'un missile. Aussi, lorsque le missile est un missile (par exemple air-sol) à bas coûts, on cherche généralement à réduire cette dérive sans utiliser de capteur additionnel (autre que la centrale inertielle déjà présente sur le missile) pour ne pas augmenter le coût.

Une méthode connue pour remédier à ce problème consiste à amener le missile en autorotation (toujours dans le même sens) autour de son axe longitudinal. Cette mise en rotation permet d'annuler en moyenne la majeure partie des dérives, comme par exemple dans le document US2010/0133374 qui divulgue un missile à rotation alternée et la correction des erreurs radiales de biais et d'échelle.

Toutefois, cette méthode usuelle n'est pas complètement satisfaisante, car elle ne permet pas de corriger les défauts de facteur d'échelle du gyromètre longitudinal. Pour cette raison le gyromètre longitudinal doit généralement être remplacé par un gyroscope, ce qui entraîne de nombreuses contraintes supplémentaires :
- surcoût additionnel (développement, intégration,...) ;
- si la centrale inertielle repose sur les technologies actuelles dites « vibrantes » (par exemple de type MEMS), le gyroscope peut uniquement fonctionner pour des vitesses de rotation élevées (supérieures à 1000°/s), et conserve une dérive de l'ordre de 1°/s, ce qui fait perdre tout intérêt à cette solution (dérive supérieure au biais gyrométrique habituel d'une centrale MEMS à bas coût) ; et
- si la centrale inertielle repose sur des technologies plus anciennes (de type gyro toupie), il n'apparaît pas de contrainte de vitesse de rotation, mais cette technologie tend à devenir obsolète.

Par ailleurs, on connaît :
- par le document US-4 017 187, un appareil de mesure inertielle à double rotation, comprenant des moyens pour annuler des erreurs de facteur d'échelle, en inversant la direction de rotation des éléments aptes à générer la rotation dudit appareil ; et
- par le document EP-0 392 104, un système de navigation inertiel comprenant une pluralité de gyroscopes.

La présente invention a pour objet de remédier aux inconvénients précités. Elle concerne un procédé de gestion automatique d'un gyromètre longitudinal qui est monté sur un engin volant à navigation inertielle, en particulier un missile aérien, susceptible d'être mis en rotation, ce procédé de gestion permettant d'éviter l'obligation de remplacer le gyromètre longitudinal par un gyroscope, et donc de réduire le coût, pour des performances de navigation comparables.

A cet effet, selon l'invention, ledit procédé est remarquable en ce que, lors de l'utilisation du gyromètre longitudinal, on commande automatiquement ledit engin volant de manière à le mettre en rotation autour de son axe longitudinal, en alternant le sens de rotation, et ceci de façon régulière (tous les n tours, n étant un entier supérieur ou égal à 1) de manière à annuler automatiquement l'effet du facteur d'échelle du gyromètre longitudinal, en plus de corriger les dérives usuelles, dont la correction est obtenue par la mise en rotation de l'engin volant.

Ainsi, par cette commande de l'engin volant destinée à le soumettre à une rotation régulièrement alternée, l'effet du facteur d'échelle du gyromètre longitudinal monté sur cet l'engin volant est naturellement annulé, comme précisé ci-dessous, en plus des autres dérives usuelles. Ces autres dérives sont, quant à elles, annulées par la présente invention de la même manière que pour la méthode usuelle précitée d'autorotation dans un seul sens.

Le besoin d'un gyroscope est donc fortement réduit (disparition de la dérive due au facteur d'échelle du gyromètre longitudinal), et la présente invention permet de conserver un gyromètre pour de nombreuses applications. La présente invention permet donc de réduire le coût, pour des performances de navigation comparables à celles relatives à l'utilisation d'un gyroscope.

L'invention peut s'appliquer à tout type de missile à navigation inertielle, dont la mise en roulis est possible sans autre contrainte (portée, concept d'emploi,...).

On alterne le sens de rotation après chaque tour de rotation de l'engin volant (n = 1). Toutefois, il est également possible de choisir n supérieur à 1 (alternance moins fréquente), par exemple dans le but de limiter l'effort aérodynamique induit.

La présente invention concerne également un engin volant à navigation inertielle, en particulier un missile aérien, susceptible d'être mis en rotation et comprenant un gyromètre longitudinal.

Selon l'invention, ledit engin volant est remarquable en ce qu'il comporte des moyens de commande automatique pour commander ledit engin volant de manière à le mettre en rotation autour de son axe longitudinal, en alternant régulièrement le sens de rotation de façon à annuler l'effet du facteur d'échelle du gyromètre longitudinal, en plus de corriger les dérives usuelles, dont la correction est obtenue par la mise en rotation de l'engin volant.

En outre, avantageusement, lesdits moyens de commande automatique font partie d'un système de commande automatique usuel dudit engin volant, qui comprend de façon usuelle notamment des moyens pour amener l'engin volant en rotation.

La présente invention permet donc de corriger à la fois les dérives usuelles (comme pour la méthode usuelle de mise en autorotation de l'engin volant) et le terme supplémentaire de facteur d'échelle.

Les figures du dessin annexé feront bien comprendre comment l'invention peut être réalisée. Sur ces figures, des références identiques désignent des éléments semblables.
La figure 1 montre, de façon partielle et très schématique, un missile pourvu d'un gyromètre longitudinal, auquel on applique la présente invention.
La figure 2 est un graphique montrant un exemple de commande alternée du sens de rotation d'un engin volant.
La figure 3 est une représentation schématique permettant d'expliquer les effets générés par la commande alternée du sens de rotation d'un engin volant sur les mesures d'un gyromètre longitudinal.

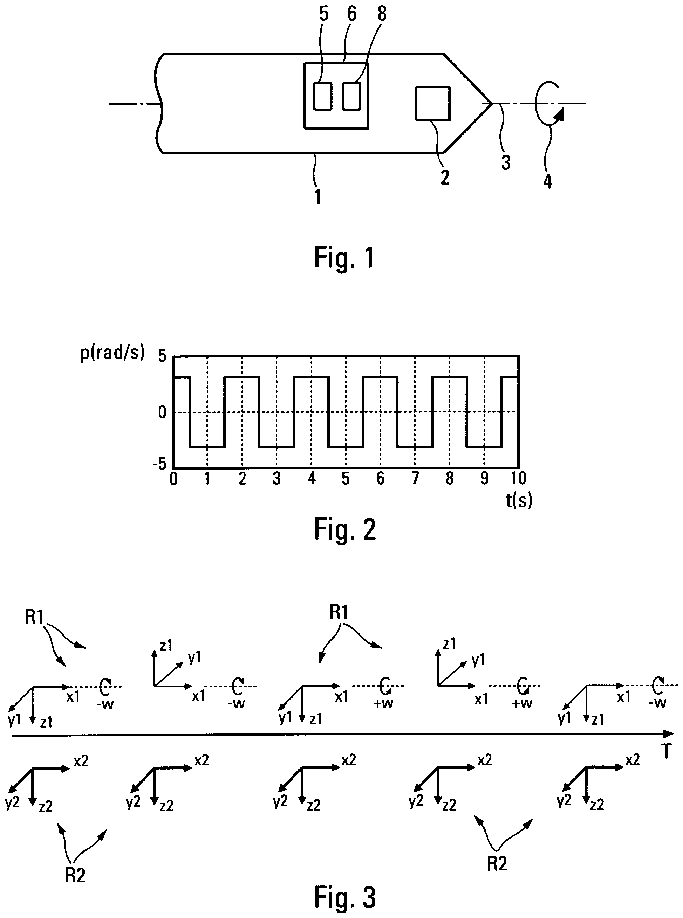

La présente invention est appliquée à un engin volant 1, en particulier un missile aérien, représenté par exemple sur la figure 1, qui est du type à navigation inertielle, qui est susceptible d'être mis en rotation (autour de son axe longitudinal 3 comme illustré par une flèche 4) et qui comprend un gyromètre longitudinal 2 usuel. La présente invention est destinée à la gestion du fonctionnement dudit gyromètre longitudinal 2. Ce gyromètre longitudinal 2 est bien connu, et ses caractéristiques ne sont pas décrites davantage dans la description suivante.

Cet engin volant 1 comporte des moyens de commande 5 usuels qui font partie d'un système de commande usuel 6 (représenté très schématiquement sur la figure 1) et qui comprennent tous les éléments nécessaires pour guider et piloter l'engin volant 1, en particulier pour qu'il puisse rejoindre et détruire une cible. Ces moyens de commande 5 comprennent notamment des moyens de traitement d'informations qui engendrent automatiquement des ordres de pilotage permettant à l'engin volant 1 de suivre une trajectoire d'interception de la cible et des moyens de pilotage (non représentés) tels que des gouvernes ou tout autre type d'éléments connus, qui appliquent automatiquement ces ordres de pilotage à l'engin volant 1. Tous ces moyens usuels sont bien connus et ne seront pas décrits davantage ci-après.

Selon l'invention, ledit engin volant 1 comporte, de plus, des moyens de commande automatique 8 pour commander ledit engin volant 1 en roulis de manière à le mettre en rotation autour de son axe longitudinal, en alternant le sens de rotation, et ceci de façon régulière, de manière à annuler l'effet du facteur d'échelle du gyromètre longitudinal. Un exemple de commande de roulis p (en rad/s) appliquée conformément à l'invention est représenté à titre d'illustration sur la figure 2.

La présente invention a donc pour objet d'imprimer à l'engin volant 1, non plus une rotation de signe constant autour de son axe longitudinal, mais d'alterner le sens de rotation régulièrement tous les tours. La commande appliquée en roulis est donc un signal périodique de moyenne nulle, au contraire de la méthode usuelle précitée qui utilise une commande de signe constant.

Ainsi, par cette commande de l'engin volant 1 destinée à le mettre en rotation alternée, l'effet du facteur d'échelle du gyromètre longitudinal 2 monté sur cet l'engin volant 1 est naturellement annulé, comme précisé ci-dessous, en plus des autres dérives. Ces autres dérives habituelles sont annulées par la présente invention de la même manière que pour la méthode usuelle précitée d'autorotation dans un seul sens.

La figure 3 permet d'expliquer la correction du facteur d'échelle. Sur cette figure 3, on a représenté :
- un axe T illustrant la variation du temps lors d'un vol de l'engin volant 1 ;
- au-dessus de cette axe T, un trièdre R1 comprenant des axes x1, y1 et z1 usuels liés à l'engin volant 1, qui est soumis à une rotation (autour de x1) générée par la commande conforme à l'invention, et ceci de façon périodique (à chaque tour), alternativement dans un sens (-w) puis dans l'autre (+ w) ;
- au-dessous de cette axe T, un trièdre R2 comprenant des axes x2, y2 et z2 sol qui sont fixes, et dans lequel sont transposées les mesures réalisées.

Cette figure 3 permet de montrer que, grâce à l'invention, les erreurs de biais (gyrométriques ou accélérométriques), qui sont constantes en axes engin, s'auto-annulent sur une période (un tour) une fois exprimées en axes sol (repère de navigation R2).

L'inversion du sens de la rotation (±w) permet d'annuler l'effet du facteur d'échelle du gyromètre 2 qui deviendrait autrement inacceptable. A titre d'illustration, en cas d'erreur de 0,1%, et même pour w faible (par exemple 1Hz, soit 2π rad/s), l'erreur engendrée en seulement 60 secondes serait de 360°x60x0,001 = 21,6° avec des conséquences inacceptables sur les dérives en vitesse et position. La solution conforme à l'invention consistant à inverser le signe de w permet d'annuler la moyenne temporelle de cette erreur.

Le besoin d'un gyroscope est donc fortement réduit (disparition de la dérive due au facteur d'échelle du gyromètre longitudinal) et la présente invention permet de conserver un gyromètre pour de nombreuses applications. Elle permet donc de réduire le coût, pour des performances de navigation comparables à l'utilisation d'un gyroscope.

On notera que :
- la projection axes engin tournant vers axes sol reste constante pour l'axe X longitudinal (à la différence des axes Y et Z) : l'axe x1 reste constant et toujours égal à +x2 (à la différence de y1 et z1 qui eux tournent bien). Pour cette raison, l'autorotation usuelle ne corrige pas les défauts longitudinaux : biais et facteur d'échelle du gyromètre X (et de l'accéléromètre X) ;
- pour une vitesse de rotation w autour de X, la dérive angulaire par seconde autour de l'axe X1 = X2 s'écrit Δ + =bgx + fgx.w, avec bgx, le biais gyromètre X, et fgx, le facteur d'échelle gyromètre X ;
- en l'état, si l'on ne fait rien, ce terme est donc constant en axes X1 comme X2 et ne s'annule pas en moyenne ;
- le terme bgx est présent et on ne peut rien y faire. En revanche, poser w = -w permet de continuer d'assurer la rotation de l'engin 1 (donc l'annulation des autres dérives corrigées par l'autorotation usuelle) et de réaliser cette fois une dérive angulaire par seconde Δ- = bgx-fgx.w.
Le terme bgx reste. Mais les termes fgx s'annulent en moyenne sur un aller-retour (étant portés par X1 =X2, cela est vrai en repère tournant comme en repère sol fixe).

La présente invention qui concerne le guidage et la navigation inertielle d'un engin volant 1, et plus particulièrement la maîtrise (limitation) des dérives inertielles au cours du vol, peut s'appliquer à tout type de missile à navigation inertielle, dont la mise en roulis est possible sans autre contrainte (portée, concept d'emploi,...).

L'exemple de la figure 2 qui illustre la commande du roulis p (exprimée en rad/s) en fonction du temps t (exprimé en secondes) prévoit une inversion du sens de la commande après chaque tour de rotation réalisé par l'engin volant 1 autour de son axe longitudinal 3 (n = 1). Toutefois, il est également possible de choisir n supérieur à 1 (alternance moins fréquente), par exemple dans le but de limiter l'effort aérodynamique induit. La vitesse de rotation pouvant cependant être faible, et la dérive due au facteur d'échelle générée pendant une rotation dans un premier sens n'étant corrigée (compensée) que pendant la rotation dans l'autre sens, il est généralement préférable de changer de sens de rotation à chaque tour.

Des mesures de dérives inertielles, suite à l'application de la commande conforme à la présente l'invention (en particulier sur un missile type air-sol, à courte portée et à bas coûts, pour lequel le surcoût d'un gyroscope est très pénalisant), et leurs comparaisons à des dérives usuelles (sans tentative de correction) et à une solution à autorotation de signe constant (sans gyroscope et avec gyroscope), ont permis de démontrer que la présente invention présente une performance inertielle proche de la solution avec gyroscope (40% à 60% des dérives compensées, contre 50 à 75% pour la solution avec gyroscope, à l'exception de l'angle de roulis), mais sans aucun surcoût ou contrainte d'équipement (pas de gyroscope, ni de capteur additionnel).

Par conséquent, selon l'invention :
- sur les axes latéraux :
   - les erreurs de biais (gyrométriques ou accélérométriques) des capteurs portés par les axes y1 et z1 sont effectivement corrigées (de la même manière qu'avec une autorotation usuelle) ;
   - les erreurs de facteur d'échelle (gyrométriques ou accélérométriques) des capteurs portés par les axes y1 et z1 sont également corrigées (de la même manière qu'avec une autorotation usuelle) ;
- sur l'axe longitudinal :
   - les erreurs de biais (gyrométrique ou accélérométrique) des capteurs portés par l'axe x1 ne sont pas corrigées (de la même manière qu'avec une autorotation usuelle) ;
   - l'erreur de facteur d'échelle accélérométrique du capteur porté par l'axe x1 n'est pas corrigée (de la même manière qu'avec une autorotation usuelle) ; mais
   - l'erreur de facteur d'échelle gyrométrique du capteur porté par l'axe x1 est corrigée (à la différence de l'autorotation usuelle).

La présente invention est relative à toute la navigation, à savoir un bloc senseur inertiel complet (sauf l'accéléromètre longitudinal).

## Revendications

1. Procédé de gestion automatique d'un gyromètre longitudinal (2) qui est monté sur un missile aérien, susceptible d'être mis en rotation, procédé selon lequel, lors de l'utilisation du gyromètre longitudinal (2), on commande automatiquement ledit missile (1) de manière à le mettre en rotation autour de son axe longitudinal (3), en alternant le sens de rotation, et ceci de façon régulière, le sens de rotation étant changé à chaque tour afin d'annuler l'effet du facteur d'échelle dudit gyromètre longitudinal (2), en plus de corriger des dérives, dont la correction est obtenue par la mise en rotation du missile (1).

2. Missile aérien, qui est susceptible d'être mis en rotation et qui comprend un gyromètre longitudinal (2), ledit missile (1) comportant des moyens de commande automatique (8) pour le commander de manière à le mettre en rotation autour de son axe longitudinal (3), en alternant le sens de rotation régulièrement, le sens de rotation étant changé à chaque tour de façon à annuler l'effet du facteur d'échelle du gyromètre longitudinal (2), en plus de corriger des dérives, dont la correction est obtenue par la mise en rotation du missile (1).

3. Missile selon la revendication 2, **caractérisé en ce que** lesdits moyens de commande automatique (8) font partie d'un système de commande automatique (6) dudit missile (1).

## Patentansprüche

1. Verfahren zur automatischen Steuerung eines länglichen Drehzahlmessers (2), der an einem Luftflugkörper montiert ist, welcher in Drehung versetzt werden kann, Verfahren, bei dem der Flugkörper (1) bei der Verwendung des länglichen Drehzahlmessers (2) automatisch so angesteuert wird, um ihn unter Wechseln der Drehrichtung, und dies in regelmäßiger Weise, um seine Längsachse (3) in Drehung zu versetzen, wobei die Drehrichtung bei jeder Umdrehung geändert wird, um zusätzlich zum Korrigieren der Drift, deren Korrektur durch das Drehen des Flugkörpers (1) erhalten wird, die Auswirkung des Skalenfaktors des länglichen Drehzahlmessers (2) aufzuheben.

2. Luftflugkörper, der in Drehung versetzt werden kann und der einen länglichen Drehzahlmesser (2) umfasst, wobei der Flugkörper (1) Mittel zur automatischen Steuerung (8) umfasst, um ihn so anzusteuern, um ihn unter regelmäßigem Wechseln der Drehrichtung um seine Längsachse (3) in Drehung zu versetzen, wobei die Drehrichtung bei jeder Umdrehung geändert wird, um zusätzlich zum Korrigieren der Drift, deren Korrektur durch das Drehen des Flugkörpers (1) erhalten wird, die Auswirkung des Skalenfaktors des länglichen Drehzahlmessers (2) aufzuheben.

3. Flugkörper nach Anspruch 2, **dadurch gekennzeichnet, dass** die Mittel zum automatischen Steuern (8) Teil eines automatischen Steuersystems (6) des Flugkörpers (1) sind.

## Claims

1. Method for automatically managing a pitch rate gyrometer (2) mounted on an airborne missile, which is capable of rotating, method wherein, when using said pitch rate gyrometer (2), said missile (1) is automatically controlled so that it can be rotated about its longitudinal axis (3) by regularly alternating the direction of rotation, the direction of rotation being changed at each turn so as to cancel the scale factor effect of said pitch rate gyrometer (2), as well as to correct drifts, which are corrected by rotating the missile (1).

2. Airborne missile, which is capable of rotating and which comprises a pitch rate gyrometer (2), said missile (1) comprising automatic control means (8) for controlling it so that it can be rotated about its longitudinal axis (3) by regularly alternating the direction of rotation, the direction of rotation being changed at each turn so as to cancel the scale factor effect of said pitch rate gyrometer (2), as well as to correct drifts, which are corrected by rotating the missile (1).

3. Missile according to claim 2, **characterised in that** said automatic control means (8) belong to an automatic control system (6) of said missile (1).
